# EUROPEAN PATENT SPECIFICATION

(11) **EP 2 854 072 B1**
(45) Date of publication and mention of the grant of the patent: **24.08.2016**
(21) Application number: 14185882.9
(22) Date of filing: 23.09.2014
(51) Int. Cl.: G06K 1/18, G06K 7/10

(54) **Device and method for bulk encoding tags**
Vorrichtung und Verfahren für schüttgutcodierende Etiketten
Dispositif et procédés codage en vrac des étiquettes

(30) Priority: 27.09.2013 US 201361883391 P
(43) Date of publication of application: 01.04.2015
(73) Proprietor: Checkpoint Systems, Inc., Thorofare, NJ 08086 (US)
(72) Inventor: Morrow, Philip Word, ROCKPORT, MA 01966 (US); Putta, Laxmiprasad, 500033 HYDERABAD AP (IN); Ramachandran, Sridhar, WOBURN, MA 01801 (US); Jayaraman, Raj, VERNON HILLS, IL 60061 (US); Fang, Jin, WELLESLEY, MA 02481 (US)
(74) Representative: Ström & Gulliksson AB

(56) References cited:
- US-A1- 2005 109 844
- US-A1- 2009 002 134
- US-A1- 2013 141 222

## Description

### TECHNICAL FIELD

Various example embodiments relate generally to retail product tagging and devices, systems, and methods for simplifying such processes.

### BACKGROUND

Retail stores often utilize universal product codes (UPC) or stock-keeping units (SKU) to store product information that uniquely identifies a given type of product (e.g. brand, size, and/or color). The UPC or SKU may then be attached to the product and may include other information such as an identity of the store to which the product is being shipped. Meanwhile, many retail stores are also employing radio frequency identification (RFID) to track products to which an RFID tag is attached. The RFID tag is uniquely identified from all other RFID tags so as to track the individual RFID tag and the specific product of which the RFID tag is attached, even when located in a group of similar type products. In some cases, products may have both an RFID tag and a UPC or SKU tag associated therewith. For example, US2009002134 discloses a system where RFID transponders are commissioned on demand at a point of use and are encoded at least with SKU information.

If it is desirable to make an association between the RFID tag and the UPC or SKU tag, the processes required are typically relatively effort intensive and require multiple hardware reading/writing units to accomplish in a short time. Furthermore, some such association methods require the saving of information in relatively large databases. Thus, it may be desirable to improve such procedures and the hardware used to engage in such procedures.

### BRIEF SUMMARY OF SOME EXAMPLES

Accordingly, some example embodiments may provide a device and/or system for improving the efficiency of associating RFID and UPC or SKU tags. In this regard, for example, some embodiments may enable scanning of information related to each such tag so an association (which could be temporary in some cases) can be made to enable bulk encoding of the RFID tags of a plurality of products with information providing the association.

In one example embodiment, a bulk encoding system is provided. The system includes an RFID tag associated with a product, a bulk encoding device including: a device interface configured to obtain tag identification information from the RFID tag; obtain product identification information from a product label of the product; and obtain electronic product code, EPC, information from the RFID tag; and processing circuitry configured to associate the tag identification information and the product identification information, wherein the device interface transmits, to the RFID tag, the association of the tag identification information and the product identification information..

According to one embodiment, the device interface is configured to obtain the tag identification information by scanning a barcode on the RFID tag.

According to another embodiment, the device interface is configured to obtain the tag identification information by reading the tag identification information from memory of the RFID tag.

According to another embodiment, the device interface transmits an overwrite message to the RFID tag; and upon receiving the overwrite message, the RFID tag overwrites the EPC information with a combination of the tag identification information and the product identification information.

According to another embodiment, the RFID tag indicates whether the overwriting is performed in-store, at a manufacturing facility, or at a distribution center.

According to another embodiment, a bulk encoding device comprises: a device interface configured to: obtain tag identification information from an RFID tag associated with a product; obtain product identification information from a product label of the product; and obtain electronic product code, EPC, information from the RFID tag, wherein the tag identification information and the EPC information are different; and processing circuitry configured to associate the tag identification information and the product identification information, wherein the device interface transmits, to the RFID tag, the association of the tag identification information and the product identification information.

According to another embodiment, the device interface is further configured to transmit a message to the RFID tag to overwrite the EPC information with a combination of the tag identification information and the product identification information; and the processing circuitry is further configured to delete the association between the tag identification information and corresponding product identification information.

According to another embodiment, the device interface is configured to obtain the tag identification information by scanning a barcode on the RFID tag.

According to another embodiment, the device interface is configured to obtain the tag identification information by reading the tag identification information from memory of the RFID tag.

According to another embodiment, the association of the tag identification information and the product identification information is stored in a database.

According to another example embodiment, the device interface is further configured to transmit, to the RFID tag, retailer specific information.

According to another embodiment, the device interface is configured to scan the product label to obtain product identification information by obtaining the universal product code (UPC) or stock-keeping unit (SKU) associated with the product.

According to another embodiment, it is provided a method comprising: obtaining tag identification information from an RFID tag associated with a product; obtaining, from a product label, product identification information of the product; associating the product identification information and the tag identification information; obtaining electronic product code, EPC, information associated with the RFID tag; and transmitting, to the RFID tag, a combination of the tag identification information and the product identification information.

According to another embodiment, the method further comprises transmitting, to the RFID tag, a message to overwrite the EPC information with a combination of the tag identification information and the product identification information; and overwriting the EPC information with the combination of the tag identification information and the product identification information.

According to another embodiment, the method further comprises locking tag access from unauthorized writing to the RFID tag responsive to completion of the overwriting.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a block diagram of a process for bulk encoding in accordance with an example embodiment;
FIG. 2 illustrates an image of an article having an RFID tag and a product label that may be used in connection with performing the process described in the example of FIG. 1 in accordance with an example embodiment;
FIG. 3 illustrates a database that may be employed as an association database in connection with an example embodiment;
FIG. 4 illustrates a block diagram of a bulk encoding device of an example embodiment; and
FIG. 5 illustrates an environment in which a bulk encoding operation can be performed in accordance with an example embodiment.

### DETAILED DESCRIPTION

Some example embodiments now will be described more fully hereinafter with reference to the accompanying drawings, in which some, but not all, example embodiments are shown. The examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other.

Some example embodiments may enable provision of a relatively simple way to bulk encode associations between RFID tags and the UPC or SKU tags. For retail stores that use both such tags, an association may be advantageous. One way to make such associations may be to scan a unique tag ID (UTID) of the RFID tag, then scan the product label on the product (e.g., for the UPC or SKU tag information), and then record the association between the two into a permanent database that can be referenced thereafter. However, such a scheme would require maintenance of the database through the potential changes that might be triggered by moving the product to another store, or the like. As a potential alternative, scanning of the UTID and product label could again be accomplished, and then the association could be written or encoded into the EPC field of the RFID tag. However, this brute force method would require a significant number of read/write devices, and significant number of store employees, in order for such encoding to be accomplished in a reasonable amount of time. Often, the only time to conduct such an association is shortly before or after a retail store opens or closes, respectively. In this time frame, store employees are often inundated with numerous tasks in preparing the store for business including accounting for sales and inventory, ordering replacement product, restocking, and cleaning. Often, only one employee is on hand to conduct such tasks. Thus, tag to product label association needs to occur quickly.

Bulk encoding in accordance with an example embodiment may enable an operator to utilize less hardware (e.g., as little as a single read/write device) to scan or otherwise obtain information from the tags to be associated. In some embodiments, the operator may only need to operate a single hand-held barcode scanner and a single hand-held bulk encoding device. In other embodiments, the retail store may already have multiple barcode scanners and require only one bulk encoding device. In other embodiments, the barcode scanner and bulk encoding device may be one unit. Thereafter, multiple encoding operations may be accomplished through interaction with a plurality of corresponding RFID tags with, for example, a single bulk encoding device. Moreover, the interaction may be substantially simultaneous so that, after obtaining RFID tag identification information (e.g., by scanning the UTID of the RFID tag) and obtaining product information (e.g., by scanning the UPC or SKU information on a product label), a group of RFID tags can be interrogated and encoded with the associations for each respective RFID tag at substantially the same time. If desired, any database used to make associations before the encoding is accomplished may then be cleared after the encoding is accomplished. Thus, there would be no requirement to maintain or manage an association database over a long period of time. As such, the association database (if any) may be a temporary storage container that could even be maintained on the bulk encoding device itself.

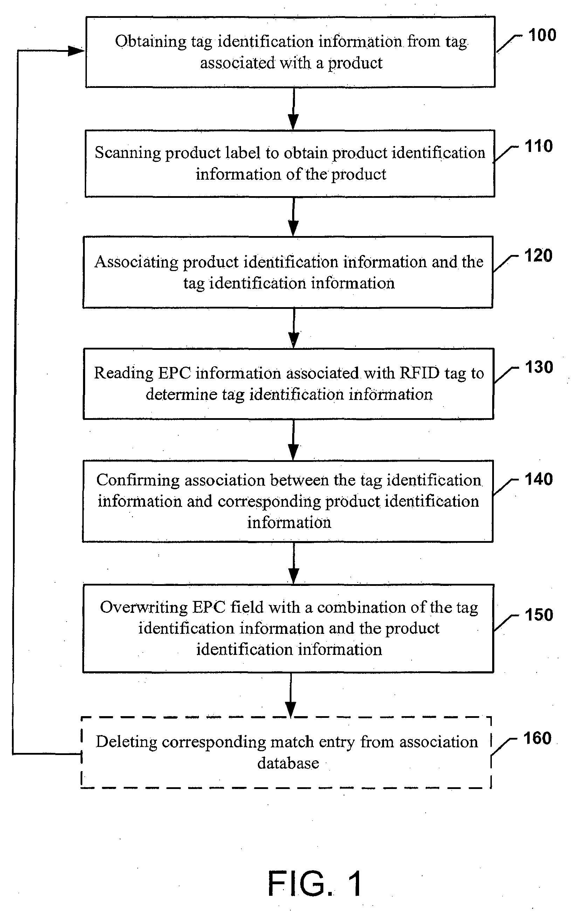

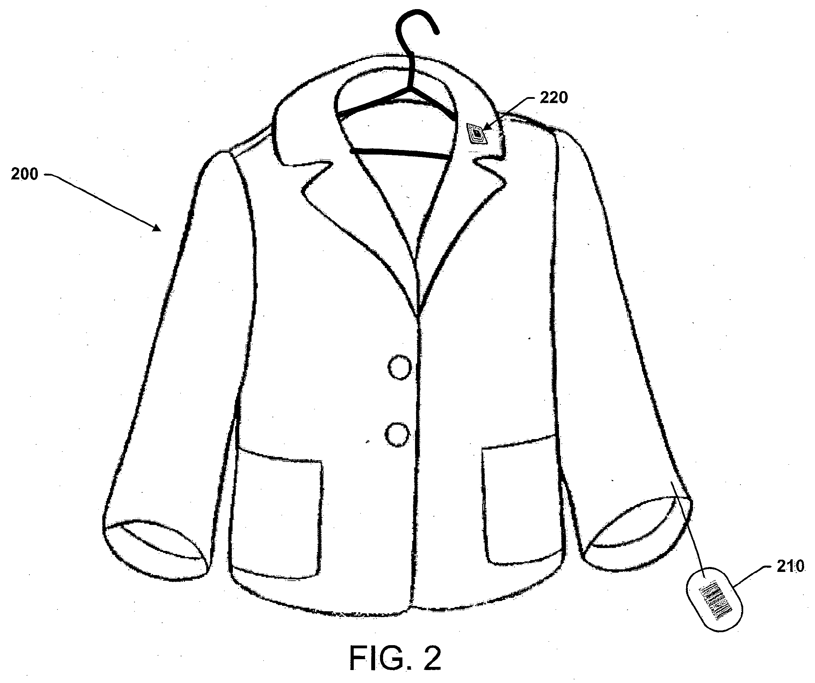

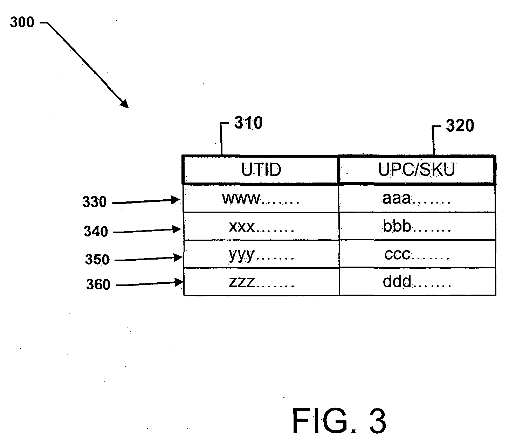

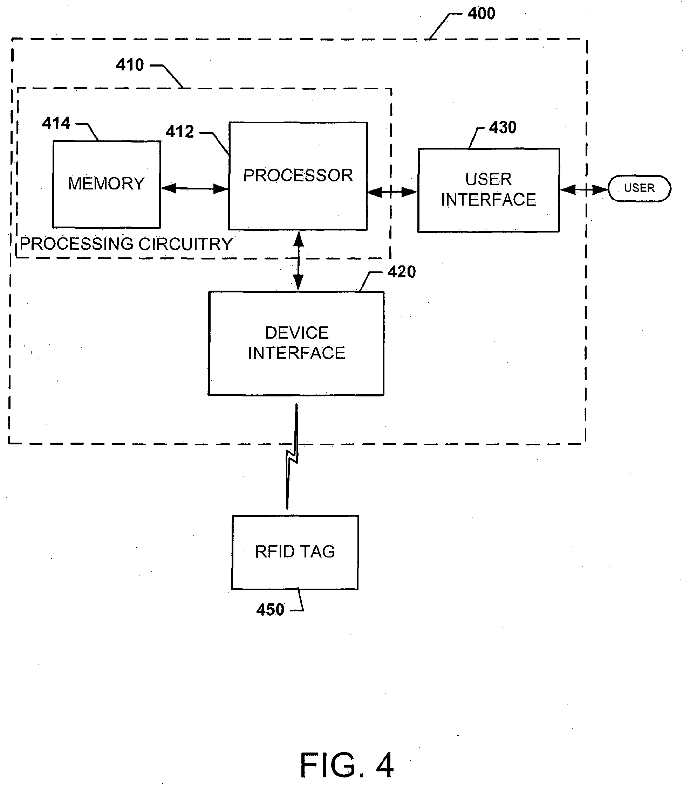

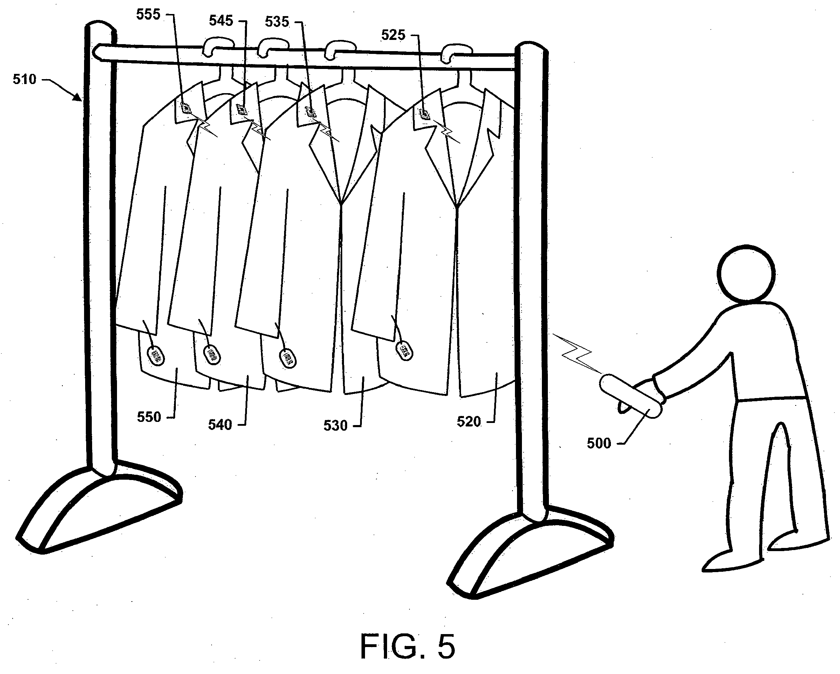

An example of a process for bulk encoding and a device capable of facilitating such encoding will now be described in reference to FIGS. 1-5. In this regard, FIG. 1 illustrates a block diagram of a process for bulk encoding in accordance with an example embodiment. FIG. 2 illustrates an image of an article having an RFID tag and a product label that may be used in connection with performing the process described in the example of FIG. 1 in accordance with an example embodiment. FIG. 3 illustrates a database that may be employed as an association database in connection with an example embodiment. FIG. 4 illustrates a block diagram of a bulk encoding device of an example embodiment. FIG. 5 illustrates an environment in which a bulk encoding operation can be performed in accordance with an example embodiment.

As shown in FIG. 1, a process in accordance with an example embodiment may include obtaining tag identification information from the RFID tag at operation 100. In some embodiments, obtaining the tag identification information may include scanning the UTID on the tag. In this regard, for example, a sticker or barcode may be provided on the external housing of the RFID tag to include or otherwise provide a serial number or other tag identification information (e.g., based on the manufacturer of the chip). In some embodiments, the barcode may be printed on a sticker. In other embodiments, the barcode may be printed directly onto or etched onto the surface of the RFID tag.

In other embodiments, the RFID tag may be embedded in a more durable security device, such as a "'hard tag." The hard tag may secure to certain merchandise through use of a pin inserted through the merchandise and then into the housing of the hard tag where it is locked. The hard tag may also secure to merchandise by use of a lanyard, wherein both ends of the lanyard are locked into the housing of the hard tag. The hard tag may secure to merchandise by any means known to one skilled in the art. The RFID tag may be inserted into the hard tag by the manufacturer of the hard tag and may thus not easily be removable from the hard tag at the retail store level. The serial number or other tag identification information may be located on the surface of the hard tag whether on a sticker or as printed or etched as barcode.

In other embodiments, the barcode may be presented on an RFID clip that may attach to a hard tag, wherein the clip contains an RFID inlay within. The tag identification information presented on the sticker or barcode may reflect the same information imprinted on the chip wafer within the RFID tag. The sticker or barcode may therefore be scanned to obtain the tag identification information. As an alternative, the tag identification information may be stored in the memory of the RFID tag or may be provided within the electronic product code (EPC) field on the RFID tag. The tag identification information stored in memory or in the EPC may also be a copy of information located on the chip wafer. Accordingly, the tag identification information may be scanned or otherwise read from the RFID tag to enable the operator to obtain the tag identification information.

Operation **100** may be performed with a laser scanner, image capture device, barcode scanner, radio frequency read device, and/or the like. The tag identification information may be a unique and perhaps random identification number, code, or other identification mechanism. The tag identification information may be a unique number, different from any other RFID tag produced. As mentioned above, in some cases, the tag identification information may be a UTID. When provided in a barcode, the tag identification information could be the entire barcode or may be embedded as a portion of the barcode.

After the tag identification information is obtained in operation 100, the process proceedSto operation **110** at which time a product label of the product associated with the RFID tag is scanned to obtain product identification information. However, it should be appreciated that the order of operations **100** and **110** could be switched in some alternative embodiments. Regardless of the order of operations, the product identification information may include the UPC or SKU of the product, which may be encoded in a barcode on the product label in some cases. The product label is typically applied by the store. Thus, for example, a barcode reader may be employed to scan the barcode to obtain the UPC or SKU of the product. However, it is also possible that, in some cases, the product identification information could already be stored on the RFID tag. Accordingly, it is also possible that operation **110** may include the retrieval of the product identification information from the RFID tag.

After the product identification information and the tag identification information have each been obtained, an association between the product identification information and the tag identification information is accomplished at operation **120**. In an example embodiment, the association may be recorded in an association database. In some cases, the association database may be temporary insofar as the association database may be cleared (or at corresponding least entries for bulk encoded associations may be cleared) when bulk encoding is completed. Accordingly, the association database may not need to reserve a particularly large amount of storage space. Thus, for example, the association database could be embodied at the bulk encoding device (or portions of the association database may be distributed over multiple bulk encoding devices). As an alternative, the association database may be located at the store or in a server or other computer within the cloud or a network accessible to the store.

At operation **130**, the bulk encoding device is used to read EPC information associated with the RFID tag to determine tag identification information. A confirmation of the association between the tag identification information and corresponding product identification information (e.g., the UPC/SKU information) may then be accomplished at operation **140.** At operation 150, the EPC field may be overwritten with a combination of the tag identification information and the product identification information. In other words, for example, the EPC field of a corresponding tag may be overwritten with the UPC/SKU + UTID from the association database. Of note, operations **130** to **150** may be performed for a group of RFID tags simultaneously, and need not be performed separately and in series with operations **100** to **120** for each respective tag. Thus, a group of tags can be "bulk encoded" to record the association of tag identification information and the product identification information on each tag in the group.

In an example embodiment, the bulk encoding device may include an RFID read/write capability to enable the bulk encoding device to engage in operations **130** to **150.** When the RFID reader reads the RFID tag, the EPC information embedded in the tag may identify the tag identification information for the tag. In some cases, the EPC may also include header information pertaining to the manufacturer of the tag and EPC format. The association database is checked to confirm that the existence of the tag identification information is read from the EPC field within the association database. When confirmation is made, the matching product identification information may be found. The overwriting into the EPC field may then include the matched tag identification information and product identification information (e.g., UPC/SKU + UTID) from the association database.

As indicated above, the association database may be temporary. Accordingly, in some embodiments, an optional operation **160** may further be accomplished to delete the corresponding match entry of the tag identification information and product identification information. With the match entry deleted, the process can begin again for the particular tag (e.g., if bulk encoding completes), for example, if the RFID tag is assigned to a new product or if a new SKU/UPC is applied to the product. However, it should be appreciated that, if desired, the association database could be stored for a predetermined period of time, or even indefinitely. The association database can be stored locally at the bulk encoding device, locally at the store, remotely in the cloud, or in a company network storage asset, for example.

FIG. 2 illustrates an example of a product **200** having a product label **210** and an RFID tag **220** provided thereon. In the embodiment shown, the RFID tag **220** is a "soft tag." In other embodiments, however, the RFID tag **220** may be a hard tag. The product label **210** and RFID tag **220** may be located in any number of locations about product **200.** For example, in some embodiments, the RFID tag **220** may be located in connection with, or in close proximity to, the product label **210.** In other embodiments, the RFID tag **220** may not be located near the product label **220** on or about the same product. As described above, the product label **210** and the RFID tag **220** may each be scanned or otherwise read to obtain product identification information (e.g., UPC or SKU) and tag identification information (e.g., UTID), respectively. The obtained product identification information and tag identification information may be stored as a matched entry in an association database.

FIG. 3 illustrates an example of an association database **300** in accordance with an example embodiment. The association database **300** includes at least a tag identification information section **310** and a product identification information section **320.** Associated pairs of tag identification information and product identification information may be stored as matched entries. In the example of FIG. 3, a first matched entry **330** is provided with corresponding UTID "www......." and corresponding UPC or SKU "aaa........" The first matched entry **330** may record, for example, the UTID and UPC/SKU of a first product. A second matched entry **340** may also be stored in the association database 300 to identify the UTID and UPC/SKU pair of a second product. Similarly, a third matched entry **350** identifying the UTID and UPC/SKU pair of a third product and a fourth matched entry **360** identifying the UTID and UPC/SKU pair of a fourth product may also be stored in the association database **300.** These UTID and UPC/SKU values in FIG. 3 are generic examples, however, and the values and numbers of characters shown are merely representative of the existence of a value. These examples should not be seen as limiting in relation to the number of bits or characters represented, or the values of such bits or characters. It should also be appreciated that the association database **300** may include more entries (or fewer entries) in some embodiments.

As mentioned above, in some cases, the association database **300** may be deleted or erased after bulk encoding. Accordingly, in some examples, the association database **300** may be a local and/or temporary database. This may save on overhead requirements associated with off-site storage. A fewer number of hand-held devices may therefore be required (e.g., as few as one per store). For example, a bulk encoding device that is hand-held could store the association database 300, and conduct rapid reads of RFID tags for confirmation and encoding of the same tags utilizing the locally stored database **300**.

Of note, the UTID may be several bits long (e.g., 64 bits) and may include such information as the manufacturing code, chip ID, serial number, etc. Meanwhile, the EPC may typically include 96 bits and may include such information as the manufacturing configuration and/or model number. In some cases, the EPC may include a number of fields that may include a predetermined number of bits. These fields may include a header field, a manufacturer information field, a product ID field (e.g., object class), and a serial number field. In some cases, the header field may be preceded by another field that may store extra information. When bulk encoding is accomplished to overwrite the EPC field with the combination of the tag identification information and the product identification information (e.g., UTID+UPC/SKU), the length of the combination value may dictate that numerous ones of the fields of the EPC are overwritten. In some cases, if the UTID is relatively short, only the serial number field may be overwritten. If the UTID is longer, however, other fields may also be overwritten (e.g., the manufacturer information field and/or the product ID field). In such a case, the header field may be used to identify whether the tag was source tagged (Serialized Global Trade Item Number (SGTIN)) or manipulated in the store (which may have its own header ID). This will prevent confusion if a newly written ID happens to mimic a manufacturing ID number. In examples in which the UTID is so long that the header field is also overwritten, the extra information field, to the left of the header field, may be used to show whether an in-store write has occurred. Accordingly, there should not be any problem generated by the possibility of duplicating a manufacturer number with the combination value (UTID+UPC/SKU).

In some embodiments, with any extra information fields available, information in addition to the combination value (UTID+UPC/SKU), may also be written into the EPC. The additional information encoded to the tag may include retailer specific information. This may include information about the product. Additional information may include store location information, such as a lot number in the store. In other embodiments, the extra information field, to the left of the header field, may be used to show whether a write has occurred in a manufacturing facility or distribution center.

In some embodiments, either during or after overwriting the EPC field in operation 150, a locking function may be performed to prevent any unauthorized overwriting of the tag outside the process described for above. For example, the lock function can lock the tag, requiring a passcode to allow for access to write to the tag. The passcode may be fixed or generated. In some embodiments, the passcode may be generated using a hash function based on product or tag information. To again write to the tag, the tag may require an unlocking, which may be based on a predefined passcode that may be fixed or generated. A generated passcode to unlock the tag may be derived from the UTID or originally written EPC in the tag using, for example, a hash function. A read/write device, as for example a bulk encoding device, would need to input the correct passcode to the tag via transmission to the tag to unlock and thus allow subsequent writing to the tag in, for example, the EPC of the tag.

FIG. 4 illustrates a block diagram of a bulk encoding device **400** of an example embodiment. The bulk encoding device **400** may take any shape or size. The bulk encoding device **400** may be carried by an operator as a hand-held. In some examples, the bulk encoding device **400** may be positioned and remain stationary at a particular location in the retail store. The bulk encoding device **400** may be integrated with some other apparatus configured for mobile transportation around the retail store, such as in a cart. As shown in FIG. 4, the bulk encoding device **400** may include processing circuitry **410** of an example embodiment as described herein. In this regard, for example, the bulk encoding device **400** may utilize the processing circuitry **410** to provide electronic control inputs to one or more functional units of the bulk encoding device **400** to obtain and/or process data associated with the one or more functional units and perform the subsequent bulk encoding processes described above in reference to FIG. 1.

In some embodiments, the processing circuitry **410** may be embodied as a chip or chip set. In other words, the processing circuitry **410** may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The processing circuitry **410** may therefore, in some cases, be configured to implement an embodiment of the present invention on a single chip or as a single "system on a chip." As such, in some cases, a chip or chipset may constitute means for performing one or more operations for providing the functionalities described herein.

In an example embodiment, the processing circuitry **410** may include one or more instances of a processor **412** and memory **414** that may be in communication with or otherwise control a device interface **420** and, in some cases, a user interface **430.** As such, the processing circuitry **410** may be embodied as a circuit chip (e.g., an integrated circuit chip) configured (e.g., with hardware, software or a combination of hardware and software) to perform operations described herein. Thus, in some embodiments, the processing circuitry **410** may be embodied as a portion of an on-board computer of the bulk encoding device **400.**

The user interface **430** may be in communication with the processing circuitry **410** to receive an indication of a user input at the user interface **430** and/or to provide an audible, visual, tactile or other output to the user. As such, the user interface **430** may include, for example, a display, one or more switches, buttons or keys (e.g., function buttons), and/or other input/output mechanisms. In an example embodiment, the user interface **430** may include one or a plurality of lights, a display, a speaker, a tone generator, a vibration unit and/or the like.

The device interface **420** may include one or more interface mechanisms for enabling communication with other devices (e.g., RFID tags, product labels, external communication network devices, etc.). In some cases, the device interface **420** may be any means such as a device or circuitry embodied in either hardware, or a combination of hardware and software that is configured to receive and/or transmit data from/to devices or components in communication with the processing circuitry **410** via internal and/or external communication mechanisms. In some cases, the device interface **420** may further include wireless communication equipment (e.g., one or more antennas) for at least communicating with an RFID tag **450.** In still further examples, the device interface **420** may include a laser scanner, image capture device, barcode scanner or any other device or component capable of obtaining the tag identification information and/or the product identification information. The device interface **420** may also be capable of writing to the EPC field of the RFID tag and, in some cases, communicating with an external network.

The processor **412** may be embodied in a number of different ways. For example, the processor **412** may be embodied as various processing means such as one or more of a microprocessor or other processing element, a coprocessor, a controller or various other computing or processing devices including integrated circuits such as, for example, an ASIC (application specific integrated circuit), an FPGA (field programmable gate array), or the like. In an example embodiment, the processor **412** may be configured to execute instructions stored in the memory **414** or otherwise accessible to the processor **412.** As such, whether configured by hardware or by a combination of hardware and software, the processor **412** may represent an entity (e.g., physically embodied in circuitry - in the form of processing circuitry **410**) capable of performing operations according to embodiments of the present invention while configured accordingly. Thus, for example, when the processor **412** is embodied as an ASIC, FPGA or the like, the processor **412** may be specifically configured hardware for conducting the operations described herein in reference to FIG. 1. Alternatively, as another example, when the processor **412** is embodied as an executor of software instructions, the instructions may specifically configure the processor **412** to perform the operations described herein in reference to FIG. 1.

In an example embodiment, the processor **412** (or the processing circuitry **410**) may be embodied as, include or otherwise control the operation of the bulk encoding device **400** based on inputs received by the processing circuitry **410**. As such, in some embodiments, the processor **412** (or the processing circuitry **410**) may be said to cause each of the operations described in connection with the bulk encoding device **400** in relation to operation of the bulk encoding device **400** relative to undertaking the corresponding functionalities associated therewith responsive to execution of instructions or algorithms configuring the processor **412** (or processing circuitry **410**) accordingly.

In an exemplary embodiment, the memory **414** may include one or more non-transitory memory devices such as, for example, volatile and/or non-volatile memory that may be either fixed or removable. The memory **414** may be configured to store information, data, applications, instructions or the like for enabling the processing circuitry **410** to carry out various functions in accordance with exemplary embodiments of the present invention. For example, the memory **414** could be configured to buffer input data for processing by the processor **412.** Additionally or alternatively, the memory **414** could be configured to store instructions for execution by the processor **412.** As yet another alternative or additional capability, the memory **414** may include one or more databases (e.g., the association database **300**) that may store a variety of data sets responsive to operation of the bulk encoding device **400.** Among the contents of the memory **414,** applications may be stored for execution by the processor **412** in order to carry out the functionality associated with each respective application. In some cases, the applications may include instructions for carrying out some or all of the operations described in reference to the algorithm of FIG. 1.

FIG. 5 illustrates an environment in which a bulk encoding operation can be performed in accordance with an example embodiment. In this regard, FIG. 5 shows an operator employing a bulk encoding device **500** to bulk encode the RFID tags of a plurality of products in one bulk encoding operation. In reference to FIG. 5, it can be assumed that the product rack **510** holds a plurality of products that have been previously scanned (i.e., in accordance with operations **100** and **110** above) to populate match entries for each product within the association database **300** of FIG. 3. Accordingly, for example, a first product **520** on the rack **510** may be associated with the first matched entry **330** of FIG. 3. The first product **520** may also include a first RFID tag **525.** The second matched entry **340** of the association database **300** of FIG. 3 may be associated with a second product **530** having a second RFID tag **535** disposed thereon. Similarly, the third matched entry **350** of the association database **300** of FIG. 3 may be associated with a third product **540** having a third RFID tag **545** disposed thereon and the fourth matched entry **360** of the association database **300** of FIG. 3 may be associated with a fourth product **550** having a fourth RFID tag **555** disposed thereon.

The bulk encoding device **500** may be used to perform operations **130** to **150** by, for example, pressing a button, trigger or other function initiator on the bulk encoding device **500** to cause the bulk encoding device **500** to read the EPC fields associated with each of the RFID tags (**525, 535, 545** and **555**). The bulk encoding device **500** may then confirm the presence of the first matched entry **330** based on the UTID of the first RFID tag **525,** the second matched entry **340** based on the UTID of the second RFID tag **535,** the third matched entry **350** based on the UTID of the third RFID tag **545,** and the fourth matched entry **360** based on the UTID of the fourth RFID tag **555**. The bulk encoding device **500,** responsive to making the confirmations described above, may then overwrite the EPC field of each RFID tag with a corresponding combination value combining the respective tag identification information (e.g., UTID) and product identification information (e.g., UPC/SKU) for each product.

Of note, although four products are shown in FIG. 5, it should be appreciated that some embodiments may be practiced in connection with many more (or less) products in other example embodiments. Accordingly, an example embodiment may provide for a flexible and efficient way to associate tag identification information with product identification information. By storing associations between these types of information in a local and/or temporary database, and by enabling bulk encoding, fewer devices may be used and less overall hardware and maintenance requirements may be borne by stores. The transfer of products to or between stores may therefore allow multiple re-encoding operations to be performed as needed in case the UPC/SKU should change, and the re-encoding can be performed in a bulk process instead of in a long series of individual operations. In this regard, since a portion of the UTID will still reside in the EPC field from a previous UTID+UPC/SKU write operation, the reader can confirm that a portion of the UTID is in the EPC field, find the association in the database, and then write a new UTID+UPC/SKU into the EPC field on successive rounds through the process. Accordingly, consumption of store resources both in terms of employee time and overhead can be reduced.

In the embodiments above, the scanning, reading, association and encoding is described as taking place in a retail environment, a store. However, in other embodiments, any one or combination of steps described for above may take place at other locations. For example, any one or more of the steps may take place at a manufacturing facility. At such a facility, or at another location, labels and/or tags may pass through tunnels that may include barcode scanning and/or RFID read/write capability devices, as in the bulk encoding device **400**. Merchandise may simply transport through such a tunnel, along a conveyor belt, for labels and/or tags to be scanned, read, or written to. In other embodiments, the merchandise may pass through a doorway including barcode scanning and/or RFID read/write capability devices. These processes may occur at a distribution center where merchandise is received from product manufacturers before being shipped to individual retail stores.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed, and modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A bulk encoding system, comprising:
an RFID tag (220) associated with a product (200);
a bulk encoding device (400), including:
a device interface (420) configured to:
obtain (100) tag identification information from the RFID tag (220);
obtain (110) product identification information from a product label (210) of the product (200); and
obtain (130) electronic product code, EPC, information from the RFID tag (220); and
processing circuitry (410) configured to associate (120) the tag identification information and the product identification information, wherein:
the device interface (420) transmits (150), to the RFID tag (220), the association of the tag identification information and the product identification information.

2. The bulk encoding system of claim 1, wherein the device interface (420) is configured to obtain the tag identification information by scanning a barcode on the RFID tag (220).

3. The bulk encoding system as in any of the preceding claims, wherein the device interface (420) is configured to obtain the tag identification information by reading the tag identification information from memory of the RFID tag (220).

4. The bulk encoding system as in any of the preceding claims, wherein:
the device interface (420) transmits an overwrite message to the RFID tag (220); and
upon receiving the overwrite message, the RFID tag (220) overwrites the EPC information with a combination of the tag identification information and the product identification information.

5. The bulk encoding system as in any of the preceding claims, wherein the RFID tag (220) indicates whether the overwriting is performed in-store, at a manufacturing facility, or at a distribution center.

6. A bulk encoding device (400), comprising:
a device interface (420) configured to:
obtain (100) tag identification information from an RFID tag (220) associated with a product (200);
obtain (100) product identification information from a product label (210) of the product (200); and
obtain (130) electronic product code, EPC, information from the RFID tag (220), wherein the tag identification information and the EPC information are different; and
processing circuitry (410) configured to associate (120) the tag identification information and the product identification information, wherein the device interface (420) transmits (150), to the RFID tag (220), the association of the tag identification information and the product identification information.

7. The bulk encoding device of claim 6, wherein:
the device interface (420) is further configured to transmit a message to the RFID tag (220) to overwrite the EPC information with a combination of the tag identification information and the product identification information; and
the processing circuitry (410) is further configured to delete (160) the association between the tag identification information and corresponding product identification information.

8. The bulk encoding device as in any of claims 6-7, wherein the device interface (420) is configured to obtain the tag identification information by scanning a barcode on the RFID tag (220).

9. The bulk encoding device as in any of claims 6-8, wherein the device interface (420) is configured to obtain the tag identification information by reading the tag identification information from memory of the RFID tag (220).

10. The bulk encoding device as in any of claims 6-9, wherein the association of the tag identification information and the product identification information is stored in a database (300).

11. The bulk encoding device as in any of claims 6-10, wherein the device interface (420) is further configured to transmit, to the RFID tag (220), retailer specific information.

12. The bulk encoding device as in any of claims 6-11, wherein the device interface (420) is configured to scan the product label (210) to obtain product identification information by obtaining the universal product code (UPC) or stock-keeping unit (SKU) associated with the product.

13. A method, comprising:
obtaining (100) tag identification information from an RFID tag (220) associated with a product (200);
obtaining (110), from a product label (210), product identification information of the product (200);
associating (120) the product identification information and the tag identification information;
obtaining (130) electronic product code, EPC, information associated with the RFID tag (220); and
transmitting (150), to the RFID tag (220), a combination of the tag identification information and the product identification information.

14. The method of claim 13, further comprising
transmitting, to the RFID tag (220), a message to overwrite the EPC information with a combination of the tag identification information and the product identification information; and
overwriting the EPC information with the combination of the tag identification information and the product identification information.

15. The method as in any of claims 13-14, further comprising locking tag access from unauthorized writing to the RFID tag (220) responsive to completion of the overwriting.

## Patentansprüche

1. Ein Bulk- bzw. Massencodierungssystem, das Folgendes aufweist:
ein RFID-Etikett bzw. RFID-Tag (220), das mit einem Produkt (200) assoziiert ist;
eine Bulk- bzw. Massencodierungseinrichtung (400), die Folgendes beinhaltet:
eine Einrichtungsschnittstelle (420), die konfiguriert ist zum:
Erlangen (100) von Tag-Identifikationsinformation von dem RFID-Tag (220);
Erlangen (110) von Produktidentifikationsinformation von einem Produktlabel (210) des Produkts (200); und
Erlangen (130) von elektronischer Produktcode- bzw. EPC-Information (EPC = electronic product code) von dem RFID-Tag (220); und
Verarbeitungsschaltkreise (410), die konfiguriert sind, zum Assoziieren (120) der Tag-Identifikationsinformation und der Produktidentifikationsinformation, wobei:
die Einrichtungsschnittstelle (420) die Assoziation der Tag-Identifikationsinformation und der Produktidentifikationsinformation an das RFID-Tag (220) sendet bzw. überträgt (150).

2. Massencodierungssystem nach Anspruch 1, wobei die Einrichtungsschnittstelle (420) konfiguriert ist zum Erlangen der Tag-Identifikationsinformation durch Scannen eines Barcodes auf dem RFID-Tag (220).

3. Massencodierungssystem nach einem der vorhergehenden Ansprüche, wobei die Einrichtungsschnittstelle (420) konfiguriert ist zum Erlangen der Tag-Identifikationsinformation durch Lesen der Tag-Identifikationsinformation aus einem Speicher des RFID-Tags (220).

4. Massencodierungssystem nach einem der vorhergehenden Ansprüche, wobei:
die Einrichtungsschnittstelle (420) eine Überschreibnachricht an den RFID-Tag (220) sendet; und
auf das Empfangen der Überschreibnachricht hin, das RFID-Tag (220) die EPC-Information mit einer Kombination der Tag-Identifikationsinformation und der Produktidentifikationsinformation überschreibt.

5. Massencodierungssystem nach einem der vorhergehenden Ansprüche, wobei das RFID-Tag (220) anzeigt, ob das Überschreiben in einem Geschäft, bei einem Herstellungsbetrieb oder bei einem Verteilungs- bzw. Distributionszentrum durchgeführt wird.

6. Eine Bulk- bzw. Massencodierungseinrichtung (400), die Folgendes aufweist:
eine Einrichtungsschnittstelle (420), die konfiguriert ist zum:
Erlangen (100) von Tag-Identifikationsinformation von einem RFID-Etikett bzw. RFID-Tag (220), das mit einem Produkt (200) assoziiert ist;
Erlangen (110) von Produktidentifikationsinformation von einer Produktkennzeichnung bzw. einem Produkt-Label (210) des Produkts (200); und
Erlangen (130) von elektronischer Produktcodeinformation bzw. EPC-Information (EPC = electronic product code) von dem RFID-Tag (220), wobei sich die Tag-Identifikationsinformation und die EPC-Information unterscheiden; und
Verarbeitungsschaltkreise (410), die konfiguriert sind zum Assoziieren (120) der Tag-Identifikationsinformation und der Produktidentifikationsinformation, wobei die Einrichtungsschnittstelle (420) die Assoziation der Tag-Identifikationsinformation und der Produktidentifikationsinformation an das RFID-Tag (220) sendet bzw. überträgt (150).

7. Massencodierungseinrichtung nach Anspruch 6, wobei:
die Einrichtungsschnittstelle (420) weiter konfiguriert ist zum Senden einer Nachricht an das RFID-Tag (220) zum Überschreiben der EPC-Information mit einer Kombination der Tag-Identifikationsinformation und der Produktidentifikationsinformation; und
die Verarbeitungsschaltkreise (410) weiter konfiguriert sind zum Löschen (160) der Assoziation zwischen der Tag-Identifikationsinformation und entsprechender Produktidentifikationsinformation.

8. Massencodierungseinrichtung nach einem der Ansprüche 6-7, wobei die Einrichtungsschnittstelle (420) weiter konfiguriert ist zum Erlangen der Tag-Identifikationsinformation durch Scannen eines Barcodes auf dem RFID-Tag (220).

9. Massencodierungseinrichtung nach einem der Ansprüche 6-8, wobei die Einrichtungsschnittstelle (420) konfiguriert ist zum Erlangen der Tag-Identifikationsinformation durch Lesen der Tag-Identifikationsinformation aus einem Speicher des RFID-Tags (220).

10. Massencodierungseinrichtung nach einem der Ansprüche 6-9, wobei die Assoziation der Tag-Identifikationsinformation und der Produktidentifikationsinformation in einer Datenbank (300) gespeichert wird.

11. Massencodierungseinrichtung nach einem der Ansprüche 6-10, wobei die Einrichtungsschnittstelle (420) weiter konfiguriert ist zum Senden von händlerspezifischer Information an den RFID-Tag (220).

12. Massencodierungseinrichtung nach einem der Ansprüche 6-11, wobei die Einrichtungsschnittstelle (420) konfiguriert ist zum Scannen des Produkt-Labels (210) zum Erlangen von Produktidentifikationsinformation durch Erlangen des universellen Produktcodes bzw. UPC (UPC = universal product code) oder der Artikelnummer bzw. SKU (SKU = stock-keeping unit), die mit dem Produkt assoziiert ist.

13. Ein Verfahren, das Folgendes aufweist:
Erlangen (100) von Tag-Identifikationsinformation von einem RFID-Etikett bzw. RFID-Tag (220), das mit einem Produkt (200) assoziiert ist;
Erlangen (110), von einem Produktlabel (210), von Produktidentifikationsinformation des Produkts (200);
Assoziieren (120) der Produktidentifikationsinformation und der Tag-Identifikationsinformation;
Erlangen (130) von elektronischer Produktcodeinformation bzw. EPC-Information (EPC = electronic product code), die mit dem RFID-Tag (220) assoziiert ist; und
Senden bzw. Übertragen (150), an das RFID-Tag (220), einer Kombination der Tag-Identifikationsinformation und der Produktidentifikationsinformation.

14. Verfahren nach Anspruch 13, das weiter Folgendes aufweist:
Senden, an den RFID-Tag (220), einer Nachricht zum Überschreiben der EPC-Information mit einer Kombination der Tag-Identifikationsinformation und der Produktidentifikationsinformation; und
Überschreiben der EPC-Information mit der Kombination der Tag-Identifikationsinformation und der Produktidentifikationsinformation.

15. Verfahren nach einem der Ansprüche 13-14, das weiter Sperren von Tag-Zugriff gegenüber unautorisiertem Schreiben auf das RFID-Tag (220) ansprechend auf den Abschluss des Überschreibens aufweist.

## Revendications

1. Système de codage de masse comprenant :
une étiquette RFID (220) associée à un produit (200) ;
un dispositif de codage de masse (400) comprenant :
une interface de dispositif (420) conçue pour :
obtenir (100) des informations d'identification d'étiquette provenant de l'étiquette RFID (220) ;
obtenir (110) des informations d'identification de produit provenant d'une étiquette de produit (210) du produit (200) ; et
obtenir (130) des informations EPC de code produit électronique
provenant de l'étiquette RFID (220) ; et
des circuits de traitement (410) conçus pour associer (120) les informations d'identification d'étiquette et les informations d'identification de produit, dans lesquels :
l'interface de dispositif (420) transmet (150) à l'étiquette RFID (220), l'association des informations d'identification d'étiquette et des informations d'identification de produit.

2. Système de codage de masse selon la revendication 1, dans lequel l'interface de dispositif (420) est conçue pour obtenir les informations d'identification d'étiquette en scannant un code barre sur l'étiquette RFID (220).

3. Système de codage de masse selon l'une des revendications précédentes, dans lequel l'interface de dispositif (420) est conçue pour obtenir les informations d'identification d'étiquette en lisant les informations d'identification d'étiquette dans la mémoire de l'étiquette RFID (220).

4. Système de codage de masse selon l'une des revendications précédentes, dans lequel :
l'interface de dispositif (420) transmet un message d'écrasement à l'étiquette RFID (220) ; et
lors de la réception du message d'écrasement, l'étiquette RFID (220) écrase les informations EPC avec une combinaison des informations d'identification de produit et les informations d'identification de produit.

5. Système de codage de masse selon l'une des revendications précédentes, dans lequel l'étiquette RFID (220) indique si l'écrasement est effectué en magasin, dans une usine de fabrication ou dans un centre de distribution.

6. Dispositif de codage de masse (400) comprenant :
une interface de dispositif (420) conçue pour :
obtenir (100) des informations d'identification d'étiquette provenant d'une étiquette RFID (220) associée à un produit (200) ;
obtenir (110) des informations d'identification de produit provenant d'une étiquette de produit (210) du produit (200) ; et
obtenir (130) des informations EPC de code produit électronique provenant de l'étiquette RFID (220), les informations d'identification
d'étiquette et les informations EPC étant différentes ; et
des circuits de traitement (410) conçus pour associer (120) les infirmations d'identification d'étiquette et les informations d'identification de produit, l'interface de dispositif (420) transmettant (150) à l'étiquette RFID l'association des informations d'identification d'étiquette et les informations d'identification de produit.

7. Dispositif de codage de masse selon la revendication 6, dans lequel :
l'interface de dispositif (420) est en outre conçue pour transmettre un message à l'étiquette RFID (220) pour écraser les informations EPC avec une combinaison des informations d'identification d'étiquette et des informations d'identification de produit ; et
les circuits de traitement (410) sont en outre conçus pour supprimer (160) l'association entre les informations d'identification d'étiquette et des informations d'identification de produit correspondantes.

8. Dispositif de codage de masse selon l'une des revendications 6 ou 7, dans lequel l'interface de dispositif (420) est conçue pour obtenir les informations d'identification d'étiquette en scannant un code barre sur l'étiquette RFID (220).

9. Dispositif de codage de masse selon l'une des revendications 6 à 8, dans lequel l'interface de dispositif (420) est conçue pour obtenir les informations d'identification d'étiquette en lisant les informations d'identification d'étiquette dans la mémoire de l'étiquette RFID (220).

10. Dispositif de codage de masse selon l'une des revendications 6 à 9, dans lequel l'association des informations d'identification d'étiquette et des informations d'identification de produit est stockée dans une base de données (300).

11. Dispositif de codage de masse selon l'une des revendications 6 à 10, dans lequel l'interface de dispositif (420) est en outre conçue pour transmettre, à l'étiquette RFID (220), des informations spécifiques de revendeur.

12. Dispositif de codage de masse selon l'une des revendications 6 à 11, dans lequel l'interface de dispositif (420) est conçue pour scanner l'étiquette de produit (210) pour obtenir les informations d'identification de produit en obtenant le code produit universel (UPC) ou l'unité de stockage (SKU) associé au produit.

13. Procédé comprenant :
l'obtention (100) d'informations d'identification d'étiquette à partir d'une étiquette RFID (220) associée à un produit (200) ;
l'obtention (110), à partir d'une étiquette de produit (210), d'informations d'identification de produit du produit (200) ;
l'association (120) des informations d'identification de produit et des informations d'identification d'étiquette ;
l'obtention (130) d'informations EPC de code produit électronique associées à l'étiquette RFID (220) ;
la transmission (150), à l'étiquette RFID (220), d'une combinaison des informations d'identification d'étiquette et des informations d'identification de produit.

14. Procédé selon la revendication 13, comprenant en outre :
la transmission, à l'étiquette RFID (220), d'un message pour écraser les informations EPC avec une combinaison des informations d'identification d'étiquette et des informations d'identification de produit ; et
l'écrasement des infirmations EPC avec la combinaison des informations d'identification d'étiquette et des informations d'identification de produit.

15. Procédé selon l'une des revendications 13 ou 14, comprenant en outre le blocage de l'accès à l'étiquette par une écriture non autorisée sur l'étiquette RFID (220) en réaction à la réalisation de l'écrasement.
